# EUROPEAN PATENT APPLICATION

(11) **EP 3 406 333 A1**
(43) Date of publication of application: **28.11.2018**
(21) Application number: 16710387.8
(22) Date of filing: 22.01.2016
(51) Int. Cl.: B01J 13/18, F28D 20/02

(54) **PROCESS FOR PRODUCING A THERMOFUNCTIONAL NANOSTRUCTURE BY EMULSION POLYMERIZATION**

(71) Applicant: Natura Cosméticos S.A., 05106-000 São Paulo SP (BR); Instituto De Pesquisas Tecnológicas Do Estado De São Paulo S.A. - IPT, 05508-901 São Paulo - SP (BR)
(72) Inventor: BUCCHI ALENCASTRE MOROZ, Juliana, 05106-000 Sâo Paulo, SP (BR); CHU YAN LING OKUDA, Jenny, 05106-000 Sâo Paul, SP (BR); NETO PEREIRA CERIZE, Natalia, 05508-900 São Paulo - SP (BR); LANIGRA GUIMARÃES, Kleber, 05508-900 São Paulo - SP (BR); MARIM DE OLIVEIRA, Adriano, 05508-900 São Paulo - SP (BR); AMBROZIO ZANIN, Maria Helena, 05508-900 São Paulo- SP (BR); ARAGÃO HOROIWA, Thaís, 05508-900 São Paulo - SP (BR); HESPPORTE IWAMOTO, Leilane, 05508-900 São Paulo - SP (BR)
(74) Representative: Abel & Imray
(86) International application number: PCT/BR2016/050007
(87) International publication number: WO 2017/124160

(57) **Abstract**

The present invention describes an approach to the design of temperature regulation systems combining, in a single structure, a heat absorption or release system by fusion or solidification of a particular material and also a particulate oxide that contributes to reflecting infrared radiation. The production of the thermofunctional nanostructure comprises six successive processing steps: a) pre-emulsifying the organic material and dispersing the colloidal oxide nanoparticles in an aqueous phase, the pre-emulsion; b) reducing droplet size in the pre-emulsion by high-pressure homogenisation; c) adsorbing the monomer in the resultant emulsion; d) polymerising and forming thermofunctional nanostructures; e) cooling the nanosuspension containing the thermofunctional structures; and optionally f) drying the product. The resultant thermofunctional nanostructure can be in the form of a colloidal dispersion in an aqueous medium or of a nanoparticle powder, if the aqueous nanostructure dispersion is subjected to a drying process. This thermofunctional nanostructure can be applied to obtain products in the fields of cosmetics, pharmaceuticals, medical equipment, prostheses, textiles, paints, coatings, composites, packaging, civil engineering, electrical or electronic equipment, the automobile and paper industries.

## Description

### FIELD OF ACTUATION

The invention belongs to the sector of materials for producing cooling or heating effect by physical transformations of phase and chemical reactions others than combustion, the thermal effect being accompanied by a phase transition from the liquid to the solid state or vice-versa, containing organic and inorganic ingredients that promote temperature regulation by using two physical principles associated in the same nanostructure of the nanocapsule type, that is, the change of phase by melting/solidification of organic material and reflection of the infrared radiation that falls onto the surface of the thermofunctional nanostructure.

This thermofunctional nanostructure may be applied in generating products related to the areas of cosmetics, pharmaceutics, medical equipment, prostheses, textiles, paints, coatings, composites, packages, civil construction, electric or electronic equipment, automobile industry and paper-making.

### PRIOR ART

Polymerization in emulsion is characterized by a system in which the monomers are dispersed in a continuous phase due to the addition of an emulsifier and are polymerized by free radicals from decomposition of a watersoluble starter. In emulsion systems, polymerization takes place in the particles swollen with monomer, and the final product is a colloidal dispersion of polymers called latex. One of the advantages of polymerization in emulsion is the possibility of synthetizing both latex with different colloidal properties (morphology, distribution of particle sizes, particle concentration, film forming property, etc.) and polymers with different properties
(composition, microstructure, distribution of molecular mass, degree of crystallinity, among others). (PI1002162-0A2: Method for producing latex free from emulsifiers via polymerization in emulsion and the resulting product).

Polymerization in emulsion takes place in a heterogeneous medium, in most cases composed of water as a dispersing agent, monomer, emulsifier and starter.

A monomer is an organic substance that, in the case of polymerization in emulsion, exhibits limited solubility in the aqueous phase. The emulsifier, which is used to promote mixture of the phases and to impart colloidal stability to the polymer particles, may be composed by a long chain of hydrocarbons of hydrophobic nature with a polar or ionic end.

For some applications, the presence of emulsifiers in the polymeric dispersion gives rise to limitations, chiefly if the product is applied in the form of a film and this application needs some type of resistance to water, moisture and/or high surface tension and resistance to wind and weather effect, as for example, oxidation. An alternative to replace emulsifiers is the employment of solid particles as protective colloids, known also as "Pickering emulsions", wherein the colloidal solid particles are positioned in the interface of the two immiscible phases of the emulsion, preventing the particles from coalescing due to the fact that the colloidal particles are adsorbed in the interface of the drops of the organic phase, decreasing the total free energy of the system. The stability of a "Pickering emulsion" depends on the particle size and on the particle-particle, particle-water and particle-oil interactions, this stabilization technique being used in various areas such as, for example, food industry, paper-making industry, paints and cosmetics. (PI1002162-0A2: Method for producing latex free from emulsifiers via polymerization in emulsion and the resulting product).

Zinc oxide nanoparticles can be anchored to the surface of nanocapsules obtained by polymerization in emulsion, aiding in the stabilization mechanism and playing the role of filtering infrared radiation, imparting to the nanostructures functionality related to reflection of radiation.

The process of producing nanocapsules by polymerization in emulsion, stabilized by solid particles, can be used in nanoencapsulation of phase-change materials (PCMs), enabling these materials to have cyclic functionality, implying utilization of the energy supplied or even removed from the medium through reuse thereof, since this material is held in the encapsulating matrix.

PCMs are materials used in thermal management, regulating the fluctuations of temperature, which have the characteristic of storing and releasing thermal energy during the melting and solidification process, since, when a material initially in liquid state cools down, it releases amounts of energy in the form of solidification latent heat or crystallization energy and, inversely, when a material initially in solid state melts, a determined amount of energy is absorbed from the environment, so as to provide transformation of the solid-liquid phase.

The materials that can be used as temperature regulators, based on the melting/solidification (latent heat) process, may be of the organic or inorganic type, wherein for organic materials, waxes and paraffins are pointed out and for inorganic materials, some salts or eutectic mixtures of salts and water are pointed out. However, in different applications in which these temperature regulating materials are employed, they need to be encapsulated so that, during the melting process, they will not spread through the substrate on which they are applied or permeate the skin, in case of cosmetic products, thus keeping their main characteristic, which is that of absorbing and releasing heat in a cyclic manner and with the same thermal efficiency of melting and solidifying enthalpy.

A few of the advantages of employing encapsulated PCMs consist in protecting the material against the influences of the external environment, increasing the heat transfer area and enabling the energy storing system to be small and portable. Besides, literature data show that a significant increase in the heat transfer is observed for the microencapsulated systems containing PCMs, due to the increase in the surface of contact with the application medium. (Salunkhe, P.B..; Shembekar, P.,S. A review on effect of phase change material encapsulation on the thermal performance of a system. Renewable and Sustainable Energy Reviews. Vol.16 (8), p. 5603-5616. 2012).

A few documents disclose the employment of systems stabilized by "Pickering Emulsion", pointing out cosmetic, pharmaceutical and agrochemical formulations, as for example WO2009027538 "Stabilised pickering emulsion"; EP1627668 "Pickering emulsion having a low viscosity"; WO2008030749 "Pickering emulsion formulations"; WO2007033931 "Novel agrochemical formulations", however, in most of them one employs the "pickering" method for stabilizing emulsions without any polymerization process associated.

A document that deserves to be pointed out is US20080220176 "Pickering emulsions, aqueous dispersions of polymeric particles, coatings, and particle networks formed therefrom", which presents a method of obtaining polymeric dispersions based on acrylate synthetized via polymerization in emulsion stabilized by solid particles (pickering emulsion). For the polymerization and stabilization process, the document discloses the employ of ultrasound to promote the emulsification and also the use of pre-formed polymers as adsorption promoting agents.

Other documents demonstrate the possibility and viability of using PCMs to regulate temperature or store renewable energy in a simple and economical manner, standing out US 20070224899 "Particulate compositions and their manufacture", which presents a method and composition of generating capsules containing hydrophobic material, among which materials that undergo melting/solidification as mechanisms that store or regulate thermal energy, as for example waxes or paraffins.

Further, documents US 20090236079 "Nanoparticle-enhanced phase change materials (NEPCM) with great potential for improved thermal energy storage", US 7919184 "Hybrid nanoparticles" and KR 20130067128 "Complex particle of phase change materials and conductive filler for a heat control material and its preparing method" present the use of organic materials encapsulated in polymeric micro/nanocapsules, as energy storing agent as a function of their melting/solidification, and the association of metallic nanoparticles to increase the rate of heat transfer between nanocapsules and the environment or the surface on which they are applied; however, the obtaining process employed, as well as the nanostructure obtained, differ from that described in process of polymerization in emulsion with stabilization of solid particles and presence of infrared radiation filter used in this "process of producing thermofunctional nanostructure obtained via polymerization in emulsion".

The use of particles as a mean for reflecting infrared radiation is also known and can be exemplified through the paper by Bendiganavale, Ashwini K. and Malshe, Vinod C. (INFRARED REFLECTIVE INORGANIC PIGMENTS, Recent Patents on Chemical Engineering, 2008, 1, 67-79) and in document US 2013/0216834 "Zinc oxide and cosmetic". In document US 2013/0216834, one discloses the use of zinc oxide microparticles for producing cosmetics that exhibit different functions, among which the reflectance of infrared radiation, but none of the papers cites the association of the mechanism of these particles as infrared radiation filters with PCM nanocapsules, summing the temperature regulation and reflectance effect obtained by the same multifunctional nanostructure.

Although some documents demonstrate the synthesis of encapsulated PCM being applied to energy storage, none of them presents the colloidal oxide employed as a temperature controlling agent or even employed in the encapsulate synthesis process, nor did the prior art disclose a nanostructure constituted by nanoencapsulated PCM and a colloidal oxide that could promote the reflection of infrared radiation in the same product, facilitating the process of formulating different functional products that could promote the control of temperature on surface, including the human body.

### SUMMARY OF THE INVENTION

The synthesis of the thermofunctional nanostructure comprises six consecutive processing phases to generate the nanoencapsulates, namely step a) pre-emulsifying the organic material and dispersing the colloidal oxide nanoparticles in aqueous phase, called pre-emulsion; step b) reducing the drop size of the pre-emulsion by employing high-pressure homogenization; step c) adsorption of the monomer in the formed emulsion; step d) polymerizing and forming the thermofunctional nanostructures; and, finally, step e) cooling the nanosuspension containing the thermofunctional structures; and, optionally, a step f) drying the product.

Thus, the process of producing thermofunctional nanostructure obtained via polymerization in emulsion of the present invention presents an approach in constructing temperature regulation systems combining, in the same structure, a system of absorbing or releasing heat by melting or solidifying a determined material and also a particulate oxide that aids in reflecting infrared radiation. Besides this association of temperature reducing mechanisms, the fact that the thermofunctional nanostructure is in a nanometric scale imparts to it greater efficiency in the heat transfer processes and surface covering power, thus guaranteeing greater reflection of infrared radiation.

The thermofunctional nanostructure obtained may present itself in the form of a colloidal dispersion in an aqueous medium or in the form of powdered nanoparticles, if the aqueous dispersion of the nanostructures is subjected to a drying process like spray-drying, fluidized-bed drying, filtration, lyophilization, centrifugation, among others. By virtue of the versatility and different forms of presentation of this thermofunctional nanostructure, it enables one to obtain different types of products for application in the cosmetics, pharmaceutical, medical-equipment, prostheses, textile, paints, coatings, composites, packages, civil construction, electric or electronic equipment, automobile and paper-making industries.

### DESCRIPTION OF THE FIGURES

Figure 1 shows the turbidimetry graph of the sample of nanoencapsulated PCM produced in Example1.
Figure 2A shows a plate with the product after reaction, exposed to a temperature of 40°C in an oven and Figure 2B shows the photomicrography obtained by electronic scanning microscopy of the nanoencapsulates of Example 1.
Figure 3 shows the graph of evaluation of 20 heating and cooling cycles by DSC relating to Example 1.
Figure 4 shows the turbidimetry graph of the sample of nanoencapsulated PCM produced with the method described in Example 2.
Figure 5A shows a plate with the product after reaction, exposed to a temperature of 40°C in an oven and Figure 5B shows photomicrography obtained by electronic scanning microscopy of the thermofunctional nanostructure of Example 2.
Figure 6 shows the graph of evaluation of 20 heating and cooling cycles by DSC relating to Example 2.
Figure 7 shows the graph of turbidimetry of the sample of nanoencapsulated PCM produced in Example 3.
Figure 8A shows a plate with the product after reaction, exposed to a temperature of 40°C in an oven and Figure 8B shows photomicrography obtained by electronic scanning microscopy of the thermofunctional nanostructure of Example 3.
Figure 9 shows the graph of evaluation of 3 heating and cooling cycles by DSC relating to Example 3.
Figure 10A shows a plate containing the product after reaction, exposed to a temperature of 40°C in an oven and Figure 10B shows photomicrography obtained by electronic scanning microscopy of the thermofunctional nanostructure of Example 4.
Figure 11 shows the graph of evaluation of 20 heating and cooling cycles by DSC relating to Example 5.
Figure 12 corresponds to the photograph of the diluted samples at a concentration of 5 ppm, of the thermofunctional nanostructure synthetized without zinc oxide (image A) and with zinc oxide (image B).
Figure 13 presents a comparison of the reflection of infrared radiation obtained by the FTIR technique of the thermofunctional nanostructure's samples containing or not containing zinc oxide.

### DETAILED DESCRIPTION OF THE INVENTION

There are a number of means for producing systems that promote regulation of the temperature of environments, objects and surfaces, guaranteeing more thermal comfort to man, but they do not present the conception of a temperature regulating agent that employs, in the same nanoparticle in the form of nanoencapsulated, materials that, by means of the melting or solidifying process, regulates temperature, and the presence of metallic oxide particles on a colloidal scale that makes reflection of infrared radiation, minimizing heat exchange by the radiation mechanism, that is, providing, in the same nanostructure, temperature controlling mechanisms for the three main forms of heat exchange: conduction, convection and radiation.

In this regard, one points out the novelty and the inventive activity of the present process of producing thermofunctional nanostructure obtained via polymerization in emulsion, which, besides using association of different concepts to regulate temperature and generate thermal comfort, will also produce nanoencapsulated PCM by an unheard-of polymerization pathway for this application, by employing monomer of the methacrylate type and exploiting a stabilization mechanism by means of solid particles, free from emulsifiers.

The present process of producing thermofunctional nanostructure obtained via polymerization in emulsion is an approach for generating thermal regulation systems without using electric energy, that is, which uses material melting/solidifying mechanisms to heat exchange and also uses materials that promote the reflection of infrared radiation, responsible for heating or cooling objects, surfaces or bodies.

The production of the thermofunctional nanostructure comprises six consecutive processing steps that enable the generation of materials of interest, namely:
step A) pre-emulsifying the organic material and dispersing the colloidal oxide nanoparticles in aqueous phase, called pre-emulsion;
step B) reducing the drop size of the pre-emulsion by employing high-pressure homogenization;
step C) adsorption of the monomer in the formed emulsion;
step D) polymerizing and forming the thermofunctional nanostructures;
step E) cooling the nanosuspension containing the thermofunctional structures; and, optionally,
step f) drying the product.

The step A), called pre-emulsification of the organic material, consists in heating the colloidal oxide dispersion in aqueous phase up to a temperature of 28 to 95°C, preferably 70°C and adding organic material for pre-emulsification.

The pre-emulsification of the organic material in the dispersed phase of heated colloidal oxide is carried out with the aid of a mechanical stirrer that can operate at a speed ranging from 20 to 2,000 rpm, preferably 1,000 rpm. The concentration of organic material in this pre-emulsion may range from 1 to 40% by mass, preferably 10% by mass.

The composition of the colloidal oxide may be based on silicon oxide, zinc oxide or titanium oxide, more preferably a mixture of silicon dioxide and zinc oxide, which may vary in a mass ratio of from 90:10 to 10:90, preferably 50:50. The concentration of the oxide of the mixture of colloidal oxide may vary from 0.1 to 15% by mass, preferably 3% by mass.

Optionally one may not include zinc oxide in this step, keeping the characteristic of PCM nanoencapsulation by an unheard-of polymerization pathway for this application, employing monomer of the methacrylate type and exploiting a mechanism of stabilization by solid particles and free of emulsifiers.

After the step A) of pre-emulsification, the dispersion containing the organic material is subjected to a step B) of process for reducing the drop size, with a view to produce a nanoemulsion of the organic material dispersed in the mixture of colloidal oxides.

This nanoemulsion is obtained with the aid of a high-pressure homogenizer, and the formation of the nanoemulsion takes place by passing the pre-emulsion through the homogenizer in cycles, from 2 to 15 cycles, preferably 8 cycles. This homogenization step may be carried out at temperatures ranging from 35 to 95°C, preferably at 50°C, under pressures that may range from 5 to 190 MPa (50 to 1,900 bar), preferably 90 MPa (900 bar).

The formation of the thermofunctional nanostructure obtained is carried out by polymerizing ethylene monomers that are adsorbed in the nanoemulsion of the organic material dispersed with the oxide nanoparaticles after the high-pressure homogenization process. This step C) of adsorption of the monomer to the nanoemulsion is carried out between 2°C and 65°C, preferably at room temperature; the time for adsorption of the monomer ranges from 10 to 180 minutes, preferably 30 minutes.

The monomers may be of the ethylene type like the acrylates, methacrylates, acrylamides, methacrylamides, vinyl monomers and styrene, preferably methyl methacrylate, and the amount of monomer used for forming the nanostructure is measured with respect to the amount of organic material used in the synthesis, that is, the mass relation between the monomer and the organic material ranges from 0.05 to 0.70, preferably 0.1.

The step D), which comprises polymerization of the monomer, is carried out at temperatures between 50 and 90°C, preferably 70°C, in an atmosphere made inert with nitrogen and in this "process of producing tehrmofunctional nanostructure via polymerization in emulsion" the use of a chemical polymerization starter is an important requirement, and one may use starters of the types: persulfates, peroxides, sulfites and azo, preferably potassium persulfate. The concentration of the starter used in this polymerization step is estimated as a function of the monomer mass, of 0.5 to 20% by mass, preferably 10%.

The step E), of cooling, is carried out under stirring at velocities ranging from 50 to 2,000 rpm, preferably of 300 rpm, for a time necessary to reach room temperature.

Optionally, one may carry out a drying step F), in which the aqueous dispersion of the functional nanostructure obtained is subjected to some drying process, such as spray-drying, fluid-bed drying, filtration, lyophilization or centrifugation.

The product generated in the "process of producing tehrmofunctional nanostructure via polymerization in emulsion" exhibits the following characteristics: average particle size ranging from 70 to 1500 nm, preferably 250 nm; pH ranging from 3.0 to 9.0, preferably 4.2; solid contents from 5.0 to 50.0% by mass, preferably 34%, spherical morphology and, when dried, it exhibits a powder aspect, partly agglomerated in an aqueous medium.

As examples of embodiment of the invention "process of producing tehrmofunctional nanostructure via polymerization in emulsion", a few production examples are presented, the generated products having been characterized for the average particle size, zeta potential, morphology, pH, colloidal physical stability, thermal profile and total solid contents.

### EXAMPLES

### Example 1: thermofunctional nanostructure containing the ratio of 64:29:7 by m/m (PCM: Colloidal Oxide: Monomers)

In a sleeved glass reactor and with bottom outlet, kept at 70°C, 18.300 g of colloidal silicon dioxide was added at 30% in water (m/m), 132.70g distilled water, 5.50 g ZnO dispersion at 50% in water (m/m) and 18.200g Agabase B-15® (vegetable oil triglycerides) under mechanical stirring at 1,000 rpm for 30 minutes until the whole PCM had been molten and formed a pre-emulsion. This pre-emulsion was subjected to homogenization under a pressure ranging from 50 to 90 MPa (500 to 900 bar) for 5 to 8 cycles on a high-pressure homogenizer, thus forming a nanoemulsion. To this nanoemulsion 2.01g methyl-methacrylate and 0.21g hydroxyl-ethylmethacrylate were added, and kept under stirring for 30 minutes in a magnetic stirrer at room temperature. The nanoemulsion obtained was transferred to a sleeved glass reactor and bottom outlet in atmosphere made inert with nitrogen at a temperature of 70°C and moderate stirring (between 300 to 400 rpm). Onto the nanoemulsion 0.200 g sodium persulfate P.A. was added. After 2 hours a further 0.100g sodium persulfate P.A. was added and after 1 more hour a further 0.100 g sodium persulfate P.A. was added, as polymerization starters. After 4 hours of the polymerization process, the sample was transferred to a glass flask immersed in an ice bath, where it was kept under stirring for 30 min with the aid of a mechanical stirrer until room temperature.

The nanoencapsulated product obtained was subjected to the characterizations of particle size and zeta potential by the dynamic light spread technique, morphology by the electronic scanning microscopy technique, colloidal physical stability by the dynamic scanning turbidimetry technique, the total solid contents by the thermogravimetry technique, evaluation of the aspect after drying in an oven, pH, quantification of the residual monomer contents in the final formulation, thermal profile by differential exploratory calorimetry (DSC).

Table 1 shows the results of average particle size, polydispersity index (PI), zeta potential (ZP), pH, total solid contents and residual monomers (methyl methacrylate (MMA) and hydroxyethylmethacrylate (HEMA)). As can be observed, the solid contents were on the order of 12.67% by mass and the average particle size of 332.6 nm, the polydispersity index being of 0.271. The residual monomers are lower than 0.01% for methylmetacrylate and lower than 0.05% for hydroxyethylmethacrylate.

**Table 1 - Results obtained with the product produced according to the experimental conditions of Example 1**

| **Size (nm)** | **PI** | **ZP** | **pH** | **Solid contents (%)** | **Residual monomer (MMA)** | **Residual monomer (HEMA)** |
|---|---|---|---|---|---|---|
| 332.6 | 0.271 | -52.30 | 7.07 | 12.67 | <0.01% | <0.05% |

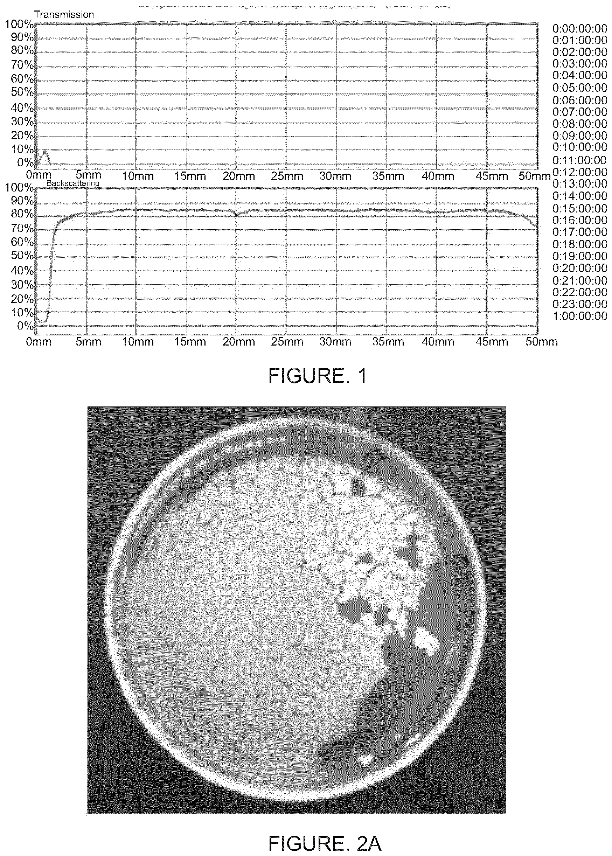

Figure 1 shows turbidimetry curves as a function of the position of the sample in the sample-holder, wherein the smaller the separation between the curves along the analysis time, which in this case was of 24 hours, the greater the colloidal physical stability of the nanoencapsulates in the aqueous medium. For this example, the product exhibited physical stability in the time period analyzed.

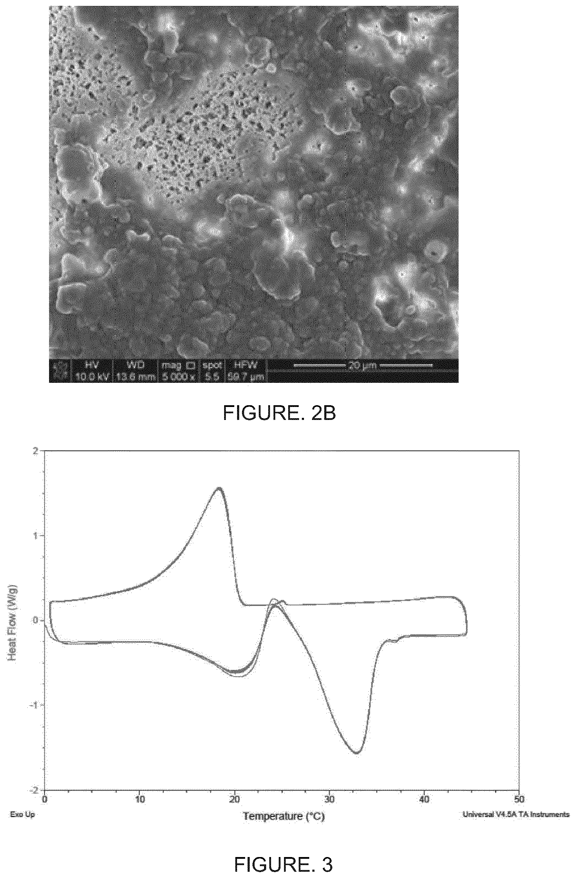

Figure 2A shows a photograph of a slab containing the product after reaction, exposed to a temperature of 40°C in an air-circulation oven. As one can observe, the aspect of the sample is "dry", that is, without the presence of molten organic material, which undergoes melting at the temperature of 32°C, indicating that it was nanoencapsualted by the process of polymerization in emulsion. Figure 2B shows a photomicrography of electronic scanning microscopy of the thermonanostructure of Example 1 and, as can be seen, the particle size was in the nanometric order.

Table 2 shows the results of evaluation of the thermal profile embracing the onset melting temperature, the peak melting temperature and the end melting temperature, in addition to the enthalpy normalized by the nanoencapsulated PCM mass evaluated. The values presented make reference to 3 cycles of thermal analysis.

**Table 2 - Results obtained from the evaluation of thermal profile of Example 1**

| **ID** | **Cycles** | **"Onset" (°C)** | **"Endset" (°C)** | **Normalized enthalpy (J/g)** |
|---|---|---|---|---|
| Thermofunctional nanostraucture EX1 (1oC/Min) | 1st | 28.62 | 35.59 | -102.10 |
| | 2nd | 24.91 | 34.68 | -94.30 |
| | 3rd | 24.97 | 34.68 | -93.71 |

Considering the values of melting enthalpy of the thermofunctional nanostructure, one calculated the value of encapsulation efficiency on the basis of the normalized melting enthalpy relation of the first heating cycle of the thermofunctional nanostructure with the normalized melting enthalpy of the pure PCM. The encapsulation efficiency was of 87.96%, having as reference the enthalpy of the pure PCM at the value of 116.07 J/g.

Figure 3 shows an evaluation of 20 heating and cooling cycles by DSC, for demonstrating the maintenance of the thermal property of the thermofunctional nanostructure, evidencing the cyclic effect of the PCM when subjected to temperature variations in the external environment. It should be pointed out that the first heating curve has a profile that is slightly different from the others, due to the fact that the solidification of the nanoencapsulate has not been made in a standardized manner by the DSC method, but it takes place at room temperature, according to step E.

### Example 2: Functional nanostructure having a ratio of 70:21:9 in m/m (PCM: Colloidal oxide : Monomers)

In a sleeved glass reactor and with bottom outlet, kept with 70°C, one added 18.150 g of colloidal silicon dioxide at 30% in water (m/m), 135.35 g of distilled water and 18.010 g of Agabase B-15® (triglycerides of vegetable oils) under mechanical stirring at 1000 rpm, for 30 minutes, until the whole PCM had been molten and formed a pre-emulsion. This pre-emulsion was subjected to homogenization under pressure ranging between 50 to 90 MPa (500 to 900 bar) for 5 to 8 cycles in a high-pressure homogenizer, thus forming a nanoemulsion. To this nanoemulsion one added 2.03g methyl-methacrylate and 0.21g hydroxy-ethylmethacrylate, and kept under stirring for 30 minutes in a magnetic stirrer at room temperature. The nanoemulsion obtained was transferred to a sleeved glass reactor and bottom outlet in atmosphere made inert with nitrogen at a temperature of 70°C and moderate stirring, between 300 to 400 rpm. Onto the nanoemulsion 0.214 g sodium persulfate P.A. was added. After 2 hours a further 0.121g sodium persulfate P.A. was added and after 1 more hour a further 0.110 g sodium persulfate P.A. was added, as polymerization starters. After 4 hours of the polymerization process, the sample was transferred to a glass flask immersed in an ice bath, where it was kept under stirring for 30 min with the aid of a mechanical stirrer until room temperature.

The nanoencapsulated product obtained was subjected to the characterizations of particle size and zeta potential by the dynamic light spread technique, morphology by the electronic scanning microscopy technique, colloidal physical stability by the dynamic scanning turbidimetry technique, the total solid contents by the thermogravimetry technique, evaluation of the aspect after drying in an oven, pH, quantification of the residual monomer contents in the final formulation, thermal profile by differential exploratory calorimetry (DSC).

Table 3 shows the results of average particle size, pH, polydispersity index (IP), zeta potential (ZP), pH, total solid contents and residual monomers (methyl methacrylate (MMA) and hydroxyethylmethacrylate (HEMA)). As can be observed, the solid contents were on the order of 12.69% by mass and the average particle size of 337.1 nm, the polydispersity index being of 0.379. The residual monomers are lower than 0.01% for methylmetacrylate and lower than 0.05% for hydroxyethylmethacrylate.

**Table 3 - results obtained with the product produced according to the experimental conditions of Example 2**

| **Size (nm)** | **PI** | **ZP** | **pH** | **Solid contents (%)** | **Residual monomer (MMA)** | **Residual monomer (HEMA)** |
|---|---|---|---|---|---|---|
| 337.1 | 0.379 | -77.70 | 6.3 | 12.69 | <0.01% | <0.05% |

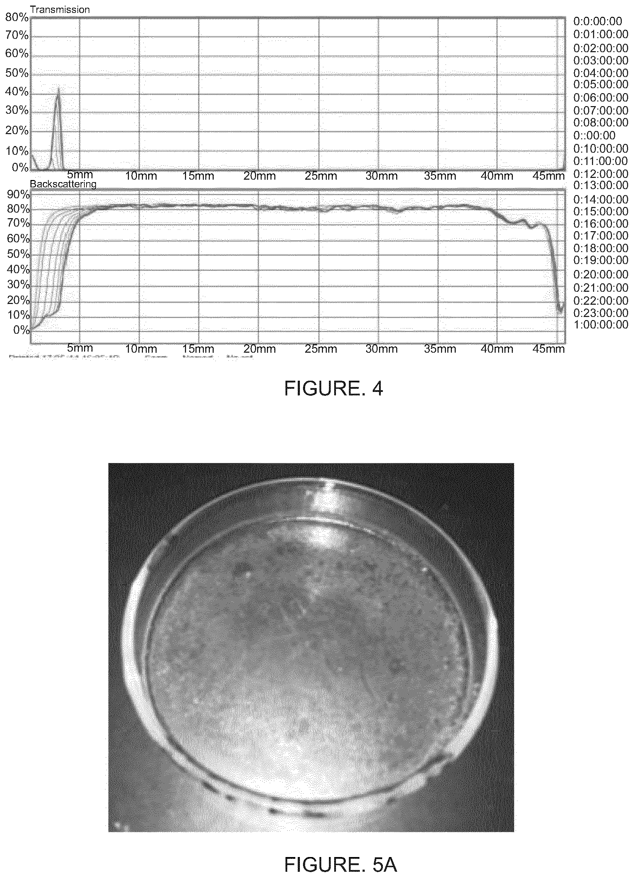

Figure 4 shows turbidimetry curves as a function of the position of the sample in the sample-holder, wherein the smaller the separation between the curves along the analysis time, which in this case was of 24 hours, the greater the colloidal physical stability of the nanoencapsulates in the aqueous medium. For this example, the product exhibited physical stability in the time period analyzed.

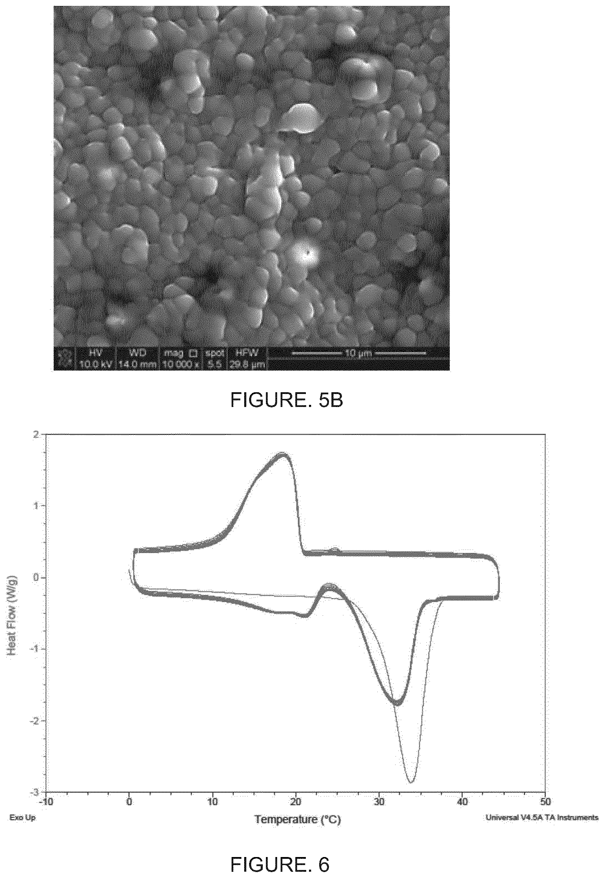

Figure 5A shows a photograph of a slab containing the product after reaction, exposed to a temperature of 40°C in an air-circulation oven. As one can observe, the aspect of the sample is "dry", that is, without the presence of molten organic material, which undergoes melting at the temperature of 32°C, indicating that it was nanoencapsualted by the process of polymerization in emulsion. Figure 5B shows a photomicrography of electronic scanning microscopy of the thermonanostructure of Example 2 and, as can be seen, the particle size was on the nanometric order.

Table 4 shows the results of evaluation of the thermal profile embracing the onset melting temperature, the peak melting temperature and the end melting temperature, in addition to the enthalpy normalized by the nanoencapsulated PCM mass evaluated. The values presented make reference to the 3 cycles of thermal analysis.

**Table 4 - Results obtained from the evaluation of the thermal profile of Example 2**

| **ID** | **Cycles** | **"Onset" (°C)** | **"Endset" (°C)** | **Normalized enthalpy (J/g)** |
|---|---|---|---|---|
| Thermofunctional nanostraucture EX2 (1oC/Min) | 1^{st} | 28.58 | 35.34 | -116.96 |
| | 2^{nd} | 25.08 | 34.51 | -98.89 |
| | 3^{rd} | 25.10 | 34.52 | -98.63 |

Considering the values of melting enthalpy of the thermofunctional nanostructure, one calculated the value of encapsulation efficiency on the basis of the normalized melting enthalpy relation of the first heating cycle of the thermofunctional nanostructure with the normalized melting enthalpy of the pure PCM. The encapsulation efficiency was of 100.07%, having as reference the enthalpy of the pure PCM at the value of 116.07 J/g.

Figure 6 shows an evaluation of 20 heating and cooling cycles by DSC, for demonstration of the maintenance of the thermal property of the thermofunctional nanostructure, evidencing the cyclic effect of the PCM when subjected to temperature variations in the external environment. It should be pointed out that the first heating curve has a profile that is slightly different from the others, as a function of the fact that the solidification of the nanoencapsulated has not been made in a standardized manner on the equipment, but rather at room temperature.

### Example 3: Thermofunctional nanostructure having the ratio 50:36:14 (PCM : MMA : Colloidal Oxide)

In a sleeved glass reactor and with bottom outlet, kept with 70°C, one added 6.06 g of colloidal silicon dioxide at 30% in water (m/m), 152.51 g of distilled water and 6.64 g of Agabase B-15® (triglycerides of vegetable oils) under mechanical stirring at 1000 rpm, for 30 minutes, until the whole PCM had been molten and formed a pre-emulsion. This pre-emulsion was subjected to homogenization under pressure ranging between 50 to 90 MPa (500 to 900 bar) for 5 to 8 cycles ion a high-pressure homogenizer, thus forming a nanoemulsion. To this nanoemulsion one added 4.44g methyl-methacrylate and 0.36g hydroxy-ethylmethacrylate, and kept under stirring for 30 minutes in a magnetic stirrer at room temperature. The nanoemulsion obtained was transferred to a sleeved glass reactor and bottom outlet in atmosphere made inert with nitrogen at a temperature of 70°C and moderate stirring, between 300 to 400 rpm. Onto the nanoemulsion 0.21g sodium persulfate P.A. was added. After 2 hours a further 0.10g sodium persulfate P.A. was added and after 1 more hour a further 0.10 g sodium persulfate P.A. was added, as polymerization starters. After 4 hours of the polymerization process, the sample was transferred to a glass flask immersed in an ice bath, where it was kept under stirring for 30 min with the aid of a mechanical stirrer until room temperature.

The nanoencapsulated product obtained was subjected to the characterizations of particle size and zeta potential by the dynamic light spread technique, morphology by the electronic scanning microscopy technique, colloidal physical stability by the dynamic scanning turbidimetry technique, the total solid contents by the thermogravimetry technique, evaluation of the aspect after drying in an oven, pH, quantification of the residual monomer contents in the final formulation, thermal profile by differential exploratory calorimetry (DSC).

Table 5 shows the results of average particle size, diameter of 10% in intensity (D10), polydispersity index (PI), zeta potential (ZP), pH, total solid contents and residual monomers (methyl methacrylate (MMA) and hydroxyethylmethacrylate (HEMA)). As can be observed, the solid contents were on the order of 5.19% by mass and the average particle size of 177.30 nm, the polydispersity index being of 0.29. The residual monomers are lower than 0.01% for methylmetacrylate and lower than 0.05% for hydroxyethylmethacrylate.

**Table 5 - Results obtained with the product produced according to the experimental conditions of Example 3**

| **Size (nm)** | **D10 (nm)** | **PI** | **ZP** | **Solid contents (%)** | **Residual monomer (MMA)** | **Residual monomer (HEMA)** |
|---|---|---|---|---|---|---|
| 177.30 | 73.57 | 0.29 | -60.29 | 5.19 | <0.01% | <0.05% |

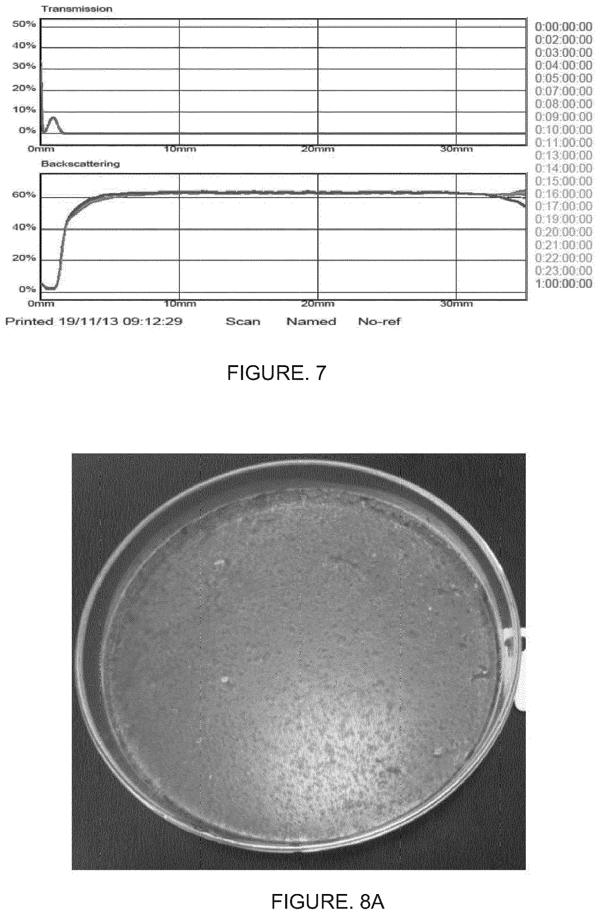

Figure 7 shows turbidimetry curves as a function of the position of the sample in the sample-holder, wherein the smaller the separation between the curves along the analysis time, which in this case was of 24 hours, the greater the colloidal physical stability of the nanoencapsulates in the aqueous medium. For this example, the product exhibited physical stability in the time period analyzed.

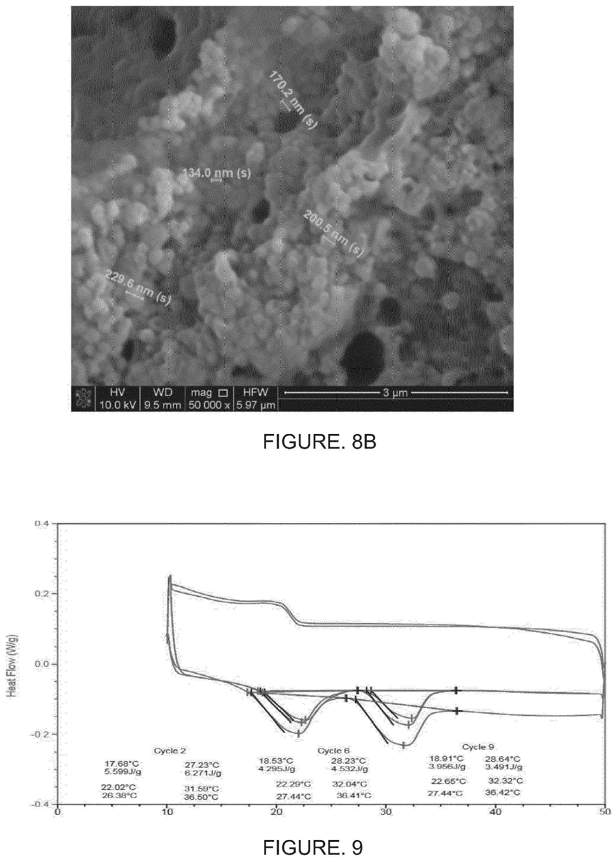

Figure 8A shows a photograph of a slide containing the product after reaction, exposed to a temperature of 40°C in an air-circulation oven. As one can observe, the aspect of the sample is "dry", that is, without the presence of molten organic material, which undergoes at the temperature of 32°C, indicating that it was nanoencapsualted by the process of polymerization in emulsion. Figure 8B shows a photomicrography of electronic scanning microscopy of the thermonanostructure of Example 3 and, as can be seen, the particle size was on the nanometric order.

Table 6 shows the results of evaluation of the thermal profile embracing the onset melting temperature, the peak melting temperature and the end melting temperature, in addition to the enthalpy normalized by the nanoencapsulated PCM mass evaluated. The values presented make reference to the 3 cycles of thermal analysis.

**Table 6 - Results obtained from the evaluation of the thermal profile of Example 3**

| **ID** | **Cycles** | **"Onset" (°C)** | **"Endset" (°C)** | **Normalized enthalpy (J/g)** |
|---|---|---|---|---|
| Thermofunctional nanostraucture EX3 (1oC/Min) | 1^{st} | 17.68 | 36.50 | -8.18 |
| | 2^{nd} | 18.53 | 36.41 | -6.09 |
| | 3^{rd} | 18.91 | 36.42 | -5.14 |

Considering the values of melting enthalpy of the thermofunctional nanostructure, one calculated the value of encapsulation efficiency on the basis of the normalized melting enthalpy relation of the first heating cycle of the thermofunctional nanostructure with the normalized melting enthalpy of the pure PCM. The encapsulation efficiency was of 87.96%, having as reference the enthalpy of the pure PCM at the value of 116.07 J/g.

Figure 9 shows an evaluation of 3 heating and cooling cycles by DSC, for demonstration of the maintenance of the thermal property of the thermofunctional nanostructure, evidencing the cyclic effect of the PCM when subjected to temperature variations in the external environment. It should be pointed out that the first heating curve has a profile that is slightly different from the others, as a function of the fact that the solidification of the nanoencapsulated has not been made in a standardized manner on the equipment, but rather at room temperature.

### Example 4: thermofunctional nanostructure having the ratio of 66 : 15 : 19 in m/m (PCM : Colloidal Oxide : Monomers)

In a sleeved glass reactor and with bottom outlet, kept with 70°C, one added 6.58 g of colloidal silicon dioxide at 30% in water (m/m), 153.51 g of distilled water and 8.37 g of Agabase B-15® (triglycerides of vegetable oils) under mechanical stirring at 1000 rpm, for 30 minutes, until the whole PCM had been molten and formed a pre-emulsion. This pre-emulsion was subjected to homogenization under pressure ranging between 50 to 90 MPa (500 to 900 bar) for 5 to 8 cycles ion a high-pressure homogenizer, thus forming a nanoemulsion. To this is nanoemulsion 2.03g methyl-methacrylate and 0.34g hydroxy-ethylmethacrylate were, and kept under stirring for 30 minutes in a magnetic stirrer at room temperature. The nanoemulsion obtained was transferred to a sleeved glass reactor and bottom outlet in atmosphere made inert with nitrogen at a temperature of 70°C and moderate stirring (from 300 to 400 rpm). Onto the nanoemulsion 0.21g sodium persulfate P.A. was added. After 2 hours a further 0.10g sodium persulfate P.A. was added and after 1 more hour one added a further 0.12 g sodium persulfate P.A. was added, as polymerization starters. After 4 hours of the polymerization process, the sample was transferred to a glass flask immersed in an ice bath, where it was kept under stirring for 30 min with the aid of a mechanical stirrer until room temperature.

The nanoencapsulated product obtained was subjected to the characterizations of particle size and zeta potential by the dynamic light spread technique, morphology by the electronic scanning microscopy technique, colloidal physical stability by the dynamic scanning turbidimetry technique, the total solid contents by the thermogravimetry technique, evaluation of the aspect after drying in an oven, thermal profile by differential exploratory calorimetry (DSC).

Table 7 shows the results of average particle size, diameter of 10% in intensity (D10), polydispersity index (PI), total solid contents. As can be seen the solid contents was on the order of 8.30% by mass, and the average particle size was of 453.90 nm, the polydispersity index being of 0.29.

**Table 7 - Results obtained with the product produced according to the experimental conditions of Example 4**

| **Size (nm)** | **D10(nm)** | **IP** | **Solid contents (%)** |
|---|---|---|---|
| 453.90 | 11.98 | 0.29 | 3.89 |

### Example 5: Nanostructure having the ratio 70 : 10 : 20 (PCM : MMA : Colloidal Oxide)

In a sleeved glass reactor and with bottom outlet, kept with 70°C, one added 8.55 g of colloidal silicon dioxide at 30% in water (m/m), 139.67 g of distilled water and 5.21 g of dispersed ZnO (50%) and 18.12 of Agabase B-15® (triglycerides of vegetable oils) under mechanical stirring at 1,000 rpm, for 30 minutes, until the whole PCM had been molten and formed a pre-emulsion. This pre-emulsion was subjected to homogenization under pressure ranging between 50 to 90 MPa (500 to 900 bar) for 5 to 8 cycles ion a high-pressure homogenizer, thus forming a nanoemulsion. To this is nanoemulsion one added 2.03g methyl-methacrylate and 0.29 hydroxy-ethylmethacrylate, and kept under stirring for 30 minutes in a magnetic stirrer at room temperature. The nanoemulsion obtained was transferred to a sleeved glass reactor and bottom outlet in atmosphere made inert with nitrogen at a temperature of 70°C and moderate stirring (from 300 to 400 rpm). Onto the nanoemulsion 0.25g sodium persulfate P.A. was added. After 2 hours a further 0.11g sodium persulfate P.A. was added and after 1 more hour a further 0.11 g sodium persulfate P.A. was added, as polymerization starters. After 4 hours of the polymerization process, the sample was transferred to a glass flask immersed in an ice bath, where it was kept under stirring for 30 min with the aid of a mechanical stirrer until room temperature.

The nanoencapsulated product obtained was subjected to the characterizations of particle size and zeta potential by the dynamic light spread technique, morphology by the electronic scanning microscopy technique, colloidal physical stability by the dynamic scanning turbidimetry technique, the total solid contents by the thermogravimetry technique, evaluation of the aspect after drying in an oven, pH, quantification of the residual monomer contents in the final formulation, thermal profile by differential exploratory calorimetry (DSC).

Table 8 shows the results of average particle size, diameter of 10% in intensity (D10), polydispersity index (PI), zeta potential (ZP), pH, total solid contents and residual monomers (methyl methacrylate (MMA) and hydroxyethylmethacrylate (HEMA)). As can be observed, the solid contents were on the order of 8.19% by mass and the average particle size of 1611.70 nm, the polydispersity index being of 0.54. The residual monomers are lower than 0.01% for methylmetacrylate and lower than 0.05% for hydroxyethylmethacrylate.

**Table 5 - Results obtained with the product produced according to the experimental conditions of Example 5**

| **Size (nm)** | **D10 (nm)** | **PI** | **ZP** | **Solid contents (%)** | **Residual monomer (MMA)** | **Residual monomer (HEMA)** |
|---|---|---|---|---|---|---|
| 1611.70 | 264.57 | 0.54 | -60.29 | 8.19 | <0.01% | <0.05% |

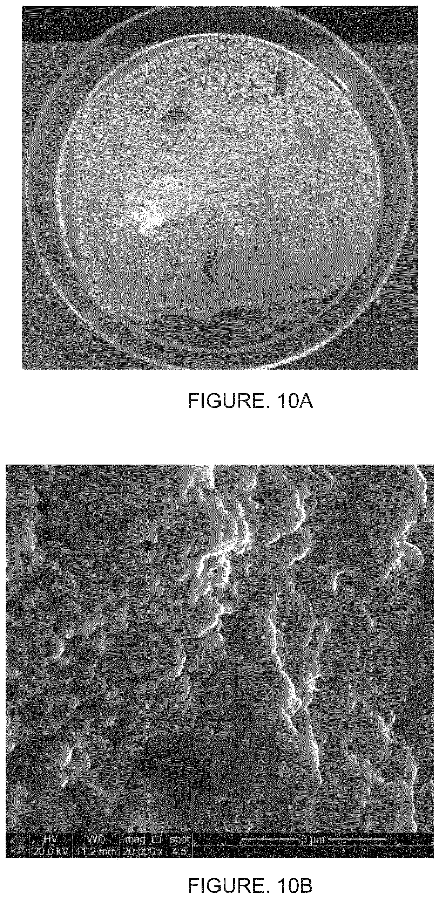

Figure 10A shows a photograph of a slide containing the product after reaction, exposed to a temperature of 40°C in an air-circulation oven. As can be seen, the aspect of the sample is "dry", that is, without the presence of molten organic material, which undergoes melting at the temperature of 32°C, indicating that is has been nanoencapsulated by the process of polymerization in emulsion. Figure 10B shows a photomicrography of electronic scanning microscopy of the thermofunctional nanostructure of Example 5 and, as can be seen, the particle size was on the nanometric order.

Table 6 shows the results of evaluation of the thermal profile embracing the onset melting temperature, the peak melting temperature and the end melting temperature, in addition to the enthalpy normalized by the nanoencapsulated PCM mass evaluated. The values presented make reference to the 3 cycles of thermal analysis.

**Table 6 - Results obtained from the evaluation of the thermal profile of Example 5**

| **ID** | **Cycles** | **"Onset" (°C)** | **"Endset" (°C)** | **Normalized enthalpy (J/g)** |
|---|---|---|---|---|
| Thermofunctional nanostraucture EX3 (1oC/Min) | 1^{st} | 27.93 | 35.47 | -134.57 |
| | 2^{nd} | 25.32 | 34.23 | -95.78 |
| | 3^{rd} | 25.25 | 34.23 | -95.93 |

Considering the values of melting enthalpy of the thermofunctional nanostructure, one calculated the value of encapsulation efficiency on the basis of the normalized melting enthalpy relation of the first heating cycle of the thermofunctional nanostructure with the normalized melting enthalpy of the pure PCM. The encapsulation efficiency was of 91.44%, having as reference the enthalpy of the pure PCM at the value of 116.07 J/g.

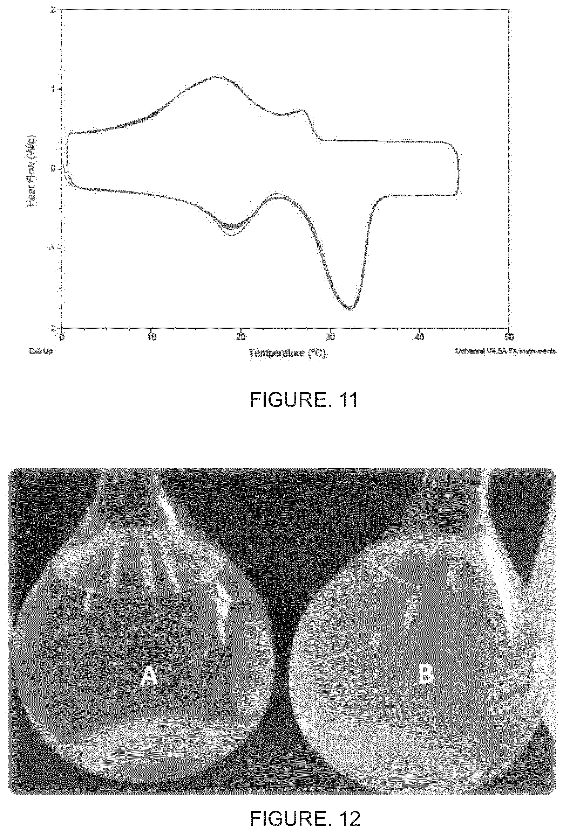

Figure 11 shows an evaluation of 20 heating and cooling cycles by DSC, for demonstration of the maintenance of the thermal property of the thermofunctional nanostructure, evidencing the cyclic effect of the PCM when subjected to temperature variations in the external environment. It should be pointed out that the first heating curve has a profile that is slightly different from the others, due to the fact that the solidification of the nanoencapsulate has not been made in a standardized manner by the DSC method, but rather at room temperature

### Example 6: Comparison of the properties of reflectance of the infrared radiation of the thermofunctional nanostraucture.

Figure 12 shows a photograph of the suspension of thermofunctional nanostructure diluted at 5 ppm (B), as compared to the same thermofunctional nanostructure in the absence of the infrared radiation filter (A). One observes the opacity effect of the suspension, even if in very diluted suspension.

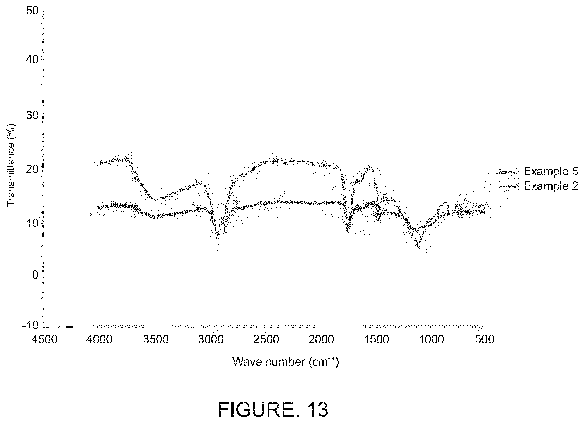

This visual effect is confirmed by the analysis of the reflection of the infrared radiation by the infrared spectroscopy technique with Fourier transform (FTIR). Figure 13 shows an evaluation of a formulation of the thermofunctional nanostructure of example 5, by FTIR, diluted at the concentration of 5 ppm. One observes that the sample of Example 5 (red curve) exhibited transmittance close to 10%, indicating that the zinc oxide present in the sample blocks the passage of the infrared radiation through the product after formation of a film, even if at a very low concentration, far from the real application, carried out with a view to verify the technical effect of the thermofunctional nanostructure.

## Claims

1. A process for producing a thermofunctional nanostructure obtained via polymerization in emulsion, **characterized by** producing nanoencapsulated PCM by a polymerization pathway, by employing monomer of the methacrylate type and a mechanism of stabilization by solid particles and free from emulsifiers and, optionally, construction of a temperature regulating system combining, in the same structure, absorption or release of heat by melting or solidifying a material and a particulate oxide that contributes in the reflection of infrared radiation, according to the following steps: Step A) pre-emulsifying the organic material and, optionally, dispersing the colloidal oxide nanoparticles in aqueous phase, called pre-emulsion; Step B) reducing the drop size of the pre-emulsion, by employing high-pressure homogenization; Step C) adsorbing the monomer in the emulsion formed; Step D) polymerizing and forming the thermofunctional nanostructures in atmosphere made inert with nitrogen; Step E) cooling the nanosuspension containing the thermofunctional structures; and, optionally, Step F) drying the product.

2. The process of producing thermofunctional nanostructure obtained via polymerization in emulsion according to claim 1, **characterized in that** Step A) consists in heating the colloidal oxide dispersion in aqueous phase at a temperature ranging from 28 to 95°C and adding the organic material for pre-emulsification.

3. The process of producing a thermofunctional nanostructure obtained via polymerization in emulsion according to claims 1 and 2, **characterized in that** the pre-emulsification of the organic material in water is carried out by means of a mechanical stirrer at a velocity ranging from 20 to 2,000 rpm and the concentration of organic material ranges from 1 to 40% by mass.

4. The process of producing a thermofunctional nanostructure obtained via polymerization in emulsion according to claim 3, **characterized in that** the velocity of the mechanical stirrer is of 1,000 rpm and the concentration of organic material is of 10% by mass and the heating temperature of the aqueous phase is of 70°C.

5. The process of producing a thermofunctional nanostructure obtained via polymerization in emulsion according to claims 1 and 2, **characterized in that** the dispersion of the colloidal oxide is optional and the concentration of the oxide of the colloidal oxide mixture ranges from 0.1 to 15% by mass.

6. The process of producing a thermofunctional nanostructure obtained via polymerization in emulsion according to claim 5, **characterized in that** the colloidal oxide composition is based on silicon dioxide, zinc oxide or titanium oxide or a mixture of silicon dioxide and zinc oxide at a massic ratio of 90:10 to 10:90 by mass.

7. The process of producing a thermofunctional nanostructure obtained via polymerization in emulsion according to claim 6, **characterized in that** the mixture of silicon dioxide and zinc oxide is of 50:50 by mass.

8. The process of producing thermofunctional nanostructure obtained via polymerization in emulsion according to claim 1, **characterized in that** in step B) the formation of the nanoemulsion takes place by high-pressure homogenization by passing the pre-emulsion through a homogenizer in 2 cycles to 15 cycles at a temperature ranging from 35 to 95°C, and under pressures that may range from 5 to 190 MPa (50 to 1,900 bar).

9. The process of producing a thermofunctional nanostructure obtained via polymerization in emulsion according to claim 8, **characterized by** passing the pre-emulsion through a homogenizer in 8 cycles, at a temperature of 50°C and under pressure of 90 MPa (900 bar).

10. The process of producing a thermofunctional nanostructure obtained via polymerization in emulsion according to claim 1, **characterized in that** in step C) the adsorption of the monomer to the nanoemulsion is carried out at a temperature ranging from 2°C to 65°C, the time for adsorption of the monomer is of 10 to 180 minutes, the mass relation between the monomer and the organic material is of 0.05 to 0.70

11. The process of producing a thermofunctional nanostructure obtained via polymerization in emulsion according to claim 10, **characterized in that** the adsorption of the monomer to the nanoemulsion is carried out at room temperature; the time for adsorption of the monomer is of 30 minutes, the mass relation between the monomer and the organic material is of 0.1 and the monomers are of the ethylene type.

12. The process of producing a thermofunctional nanostructure obtained via polymerization in emulsion according to claims 1 and 11, **characterized in that** the monomers are acrylates, methacrylates, acrylamides, methacrylamides, vinyl or styrene.

13. The process of producing a thermofunctional nanostructure obtained via polymerization in emulsion according to claim 12, **characterized in that** the monomer is methyl methacrylate.

14. The process of producing a thermofunctional nanostructure obtained via polymerization in emulsion according to claim 1, **characterized in that** the step D) is carried at temperatures between 50 and 90 °C, by using a polymerization chemical starter of the types persulfates, peroxides, sulfites and azo, at a concentration ranging from 0.5 to 20% by mass.

15. The process of producing a thermofunctional nanostructure obtained via polymerization in emulsion according to claim 14, **characterized in that** the temperature is of 70°C, the polymerization chemical starter is potassium persulfate at the concentration of 10% by mass.

16. The process of producing a thermofunctional nanostructure obtained via polymerization in emulsion according to claim 1, **characterized in that** the step E) is carried out under stirring at a velocity ranging from 50 to 2,000 rpm for a time necessary to reach room temperature.

17. The process of producing a thermofunctional nanostructure obtained via polymerization in emulsion according to claim 16, **characterized in that** the step E) is carried out at a velocity of 300 rpm.

18. The process of producing a thermofunctional nanostructure obtained via polymerization in emulsion according to claim 1, **characterized by** optionally carrying out the step F) of drying by submitting the aqueous dispersion of the functional nanostructure obtained in some drying process, such as spray-drying, fluid-bed drying, filtration, lyophilization or centrifugation.
